# EUROPÄISCHE PATENTSCHRIFT

(11) **EP 1 161 376 B1**
(45) Veröffentlichungstag und Bekanntmachung des Hinweises auf die Patenterteilung: **30.06.2004**
(21) Anmeldenummer: 00916950.9
(22) Anmeldetag: 15.03.2000
(51) Int. Cl.: B65D 35/22, B29C 70/76, B29D 23/20, B65D 81/32

(54) **ZWEIKAMMERTUBE**
TWO-CHAMBER TUBE
TUBE A DEUX CHAMBRES

(30) Priorität: 16.03.1999 DE 19911728
(43) Veröffentlichungstag der Anmeldung: 12.12.2001
(73) Patentinhaber: AISA AUTOMATION INDUSTRIELLE SA, 1896 Vouvry (CH)
(72) Erfinder: KELLER, Gerhard, CH-1805 Jongny (CH); VOIGTMANN, Jean-Pierre, CH-1820 Martigny (CH)
(74) Vertreter: Zellentin, Rüdiger, Dr.
(86) Internationale Anmeldenummer: PCT/EP2000/002290
(87) Internationale Veröffentlichungsnummer: WO 2000/055062

(56) Entgegenhaltungen:
- EP-A- 0 867 374
- DE-C- 19 640 833
- US-A- 4 240 566
- US-A- 5 076 470
- US-A- 5 102 016
- PATENT ABSTRACTS OF JAPAN vol. 010, no. 323 (M-531), 5. November 1986 (1986-11-05) -& JP 61 130027 A (YOSHINO KOGYOSHO CO LTD), 17. Juni 1986 (1986-06-17)

## Beschreibung

Die Erfindung betrifft eine Zweikammertube gemäß dem Oberbegriff des Anspruchs 1.

Derartige Tuben sind z. B. aus der DE-C- 196 40 833 bekannt. Hierbei kann durch eine Verschlußkappe jede Kammer dicht verschlossen werden, so daß ein Kontakt oder eine Verbindung der beiden Komponenten innerhalb der Tube und letztlich auch bei der Ausgabe nicht möglich ist. Die Ausgabe erfolgt in zwei getrennten, d. h. nicht oder nur unzulänglich aneinander haftenden Strömen.

Aus der US-A- 5 102 016 sind Zweikammertuben bekannt, die u. a. auch eine durch einen Spalt getrennte obere und untere Trennwand aufweisen, wobei die obere Trennwand einen zur Ausgabeöffnung im Hals konisch zulaufenden Querschnitt aufweist. Auch besteht eine strikte Trennung der Teilströme im Ausgabebereich.

Es ist bei einigen sinnvollerweise getrennt aufzubewahrenden Komponenten oder Materialien von Vorteil, wenn sie beim Ausbringen wenigstens etwas miteinander verbunden werden oder zu einem einzigen Materialstrom, wie bei einer Tube ohne Trennwand, vereinigt werden, um einem Auseinanderfallen der beiden Teilströme vorzubeugen bzw. deren innige Verbindung zu erreichen.

Aufgabe der Erfindung ist es, eine Zweikammertube der eingangs genannten Art dahingehend zu gestalten, daß ein Zusammenfließen und Aneinanderhaften der ansonsten getrennt gehaltenen Komponenten bei ihrer Ausgabe erfolgt.

Diese Aufgabe wird durch eine Zweikammertube gemäß Anspruch 1 erreicht.

Nachstehend wird die Erfindung anhand von Ausführungsbeispielen unter Bezug auf Zeichnungen näher erläutert. Es zeigt:
- Fig. 1: einen Ausschnitt einer erfindungsgemäßen Zweikammertube im Axialschnitt senkrecht zur Trennwand;
- Fig. 2: das gleiche wie in Fig. 1 im Schnitt in der Ebene der Trennwand;
- Fig. 3: eine Vorrichtung zum Anformen eines Tubenkopfs an einen Rohrkörper mit Trennwand, wobei der obere Teil der Trennwand unmittelbar unter der Austrittsöffnung endet;
- Fig. 4: eine entsprechende Vorrichtung, wobei der obere Teil der Trennwand durch Preßformen erzeugt wird;
- Fig. 5: zwei Querschnitte durch Tubenrohrkörper mit einer Trennwand für Zweikammertuben;
- Fig. 6: Zuschnitte von Trennwänden.

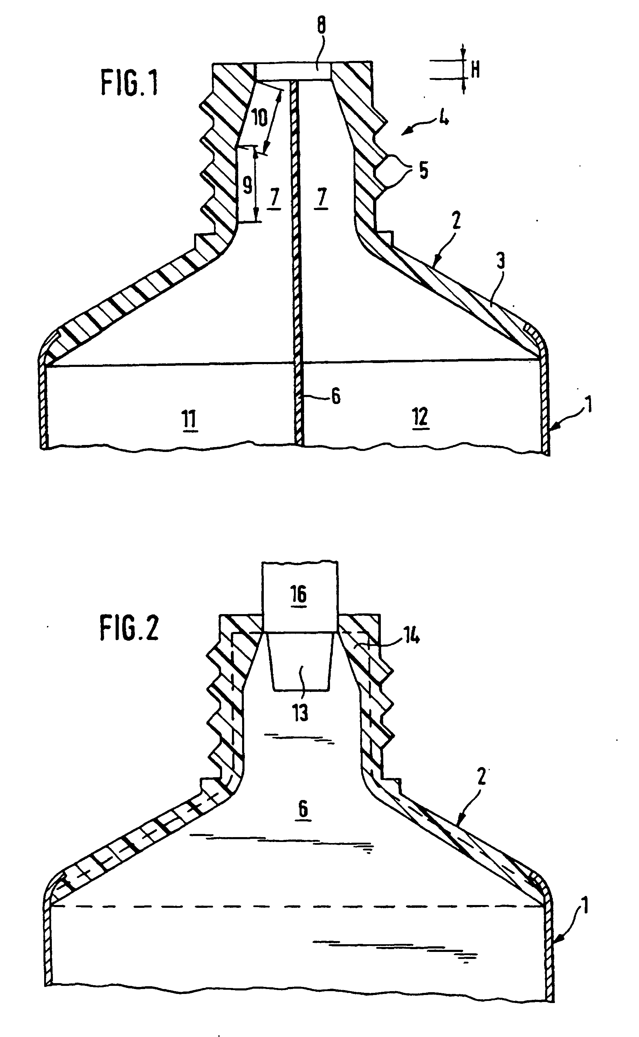

Der in Fig. 1 dargestellte Ausschnitt einer Zweikammertube weist ein Tubenrohr 1 und einen angeformten Tubenkopf 2 auf, der einen konischen Schulterteil 3 und einen Hals 4 enthält. Der Hals 4 ist mit einem Außengewinde 5 zum Aufschrauben einer nicht dargestellten Verschlußkappe versehen.

Es können auch Verschlüsse zum Aufprellen ohne Gewinde vorgesehen werden, z. B. Verschlüsse mit verschwenkbaren Kappen.

Im Rohrkörper 1 erstreckt sich über seine Länge eine Trennwand 6, die sich in den Innenraum des Halses 4 fortsetzt. Im Hals 4 besteht deshalb ein geteilter Durchgangskanal 7, der sich bis zur Ausgabeöffnung 8 am Ende des Halses 4 erstreckt. Der untere Teil 9 des Durchgangskanals 7 ist zylindrisch gestaltet. An ihn schließt sich bis zur Ausgabeöffnung 8 ein sich konisch verjüngender Teil 10 an, der ein Zusammenfließen der Materialströme bei einer Entnahme bewirkt.

Bei dem Ausführungsbeispiel gemäß Fig. 1 ist die Ausgabeöffnung 8 zylindrisch gestaltet und die Trennwand 6 endet unmittelbar unterhalb der Ausgabeöffnung 8. Die nicht dargestellte Verschlußkappe weist einen inneren zylindrischen Vorsprung auf, der bei auf das Gewinde 5 aufgeschraubter Verschlußkappe mit dem oberen Ende der Trennwand 6 zusammenwirkt und somit die jeweiligen Komponenten in den Kammern 11, 12 bei geschlossenem Verschluß vollständig voneinander trennt. Je nach Höhe H der zylindrischen Ausgabeöffnung 8 erfolgt bei Ausgabe der beiden Komponenten durch die Ausgabeöffnung 8 eine mehr oder weniger starke Verbindung und ein Aneinanderhaften der aus den Kammern 11 und 12 austretenden Materialströme.

Zur stärkeren Verbindung der Materialströme noch vor dem Erreichen der Ausgabeöffnung 8 weist - sofern ein Drehverschluß vorgesehen ist-die Trennwand 6 am oberen Ende einen zur Längsachse der Trennwand 6 spiegelsymmetrischen Ausschnitt 13 (Fig. 2) auf. Dieser Ausschnitt 13 aus der Trennwand 6 kann rechteckig, auch quadratisch, oder konisch gestaltet sein, wobei dann die größere Basis an der Ausgabeöffnung 8 anliegt. Als konische Gestalt kommt eine kegelige oder stumpfkegelige Form in Frage. Bei Schwenkverschlüssen kann der Ausschnitt 13 weitgehend frei gestaltet sein, eine spiegelsymmetrische Ausgestaltung ist dann jedenfalls nicht erforderlich. Durch den Ausschnitt 13 in der Trennwand 6 kommen die aus den Kammern 11, 12 austretenden Materialströme sehr viel früher miteinander in Kontakt und können sich daher - insbesondere auch durch das Zusammenfließen aufgrund der Verjüngung im Hals 4 - besser miteinander verbinden. Um die Trennung der beiden Komponenten während der Lagerung zu gewährleisten, weist eine nicht dargestellte aufschraubbare Verschlußkappe einen rotationssymmetrischen und eine schwenkbare einen weitgehend beliebig gestalteten Vorsprung auf, der mit der Ausschnitt 13 formschlüssig zusammenwirkt und die Trennung der beiden Komponenten bei geschlossenem Verschluß gewährleistet. Wie aus Fig. 2 gut ersichtlich, kann der in den Hals 4 reichende obere Abschnitt der Trennwand 6 nicht verjüngt sein, wodurch er von mehr Kunststoffmaterial des angeformten Tubenkopfes 2 - gerade im Austrittsbereich - umgeben wird, so daß er gerade in diesem Teil sehr gut und fest verankert ist. Natürlich ist es auch möglich, auch den oberen Abschnitt der Trennwand 6 entsprechend dem konischen, sich verjüngenden Teil des inneren Halses 4 ebenfalls verjüngt zu gestalten.

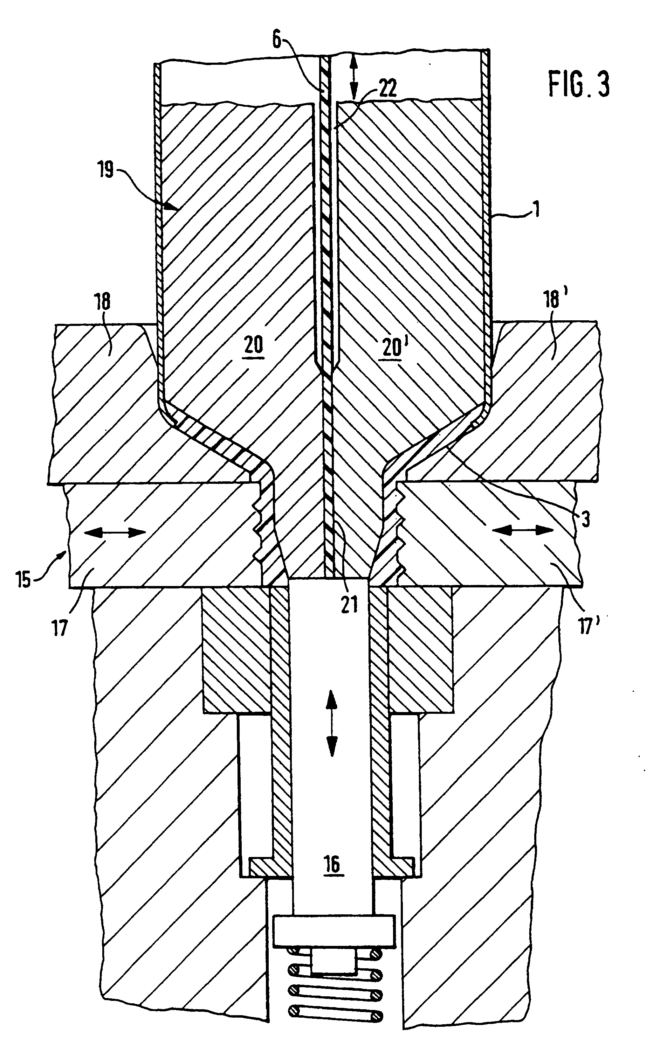

In Fig. 3 ist eine Vorrichtung zur Herstellung einer Zweikammertube dargestellt. Die Vorrichtung weist eine mehrteilige Matrize 15 mit einem zentral zustellbaren abgefederten Lochstempel 16, zustellbaren Teilen 17, 17', die zur Herstellung der Außenform des Halses 4 - hier mit Gewinde 5 - dienen, sowie eine Form 18, die zur Aufnahme des einen Endes des Rohrkörpers 1 sowie zur Herstellung der Außenform des Schulterteils 3 des Tubenkopfes 2 und gleichzeitig zur Verbindung des Tubenkopfes 2 mit dem Tubenrohr 1 dienen. In die Matrize 15 ist ein Dorn 19 einführbar, der aus zwei Dornteilen 20, 20' besteht, dessen vorderes Ende eine Außenform aufweist, die der Innenform des Tubenkopfes 2 inklusive des Durchgangskanals 7 der Zweikammertube entspricht. Im Trennspalt 21 sowie im sich anschließenden verbreiterten Schlitz 22 zwischen den beiden Dornteilen 20, 20' ist die Trennwand 6 angeordnet.

In dem in Fig. 3 dargestellten Ausführungsbeispiel ist der Trennspalt 21 im vorderen Ende des Dorns 19 (im Tubenkopfbereich) mit einer Stärke ausgeführt, die der Stärke der Trennwand 6 angepaßt ist bzw. ihr entspricht. Dieser enge Trennspalt 21 muß oberhalb der Ebene des anzuformenden Tubenkopfes enden oder mindestens bis in diesen Bereich reichen, da sonst beim Anformen des Kopfes Schmelze in den Trennspalt 21 eindringen kann. Er dient dazu, das obere Ende der Trennwand 6 zwischen den vorderen Enden der Dornteile 20, 20' festzuhalten, quasi einzuklemmen und dadurch die Trennwand 6 beim Anformvorgang des Tubenkopfes zu stabilisieren. An den engen Trennspalt 21 schließt sich der erweiterte Schlitz 22 an, der zur erleichterten Einführung der Trennwand 6 zwischen die Dornteile 20, 20' dient. Um dies weiter zu erleichtern, können die beiden Dornteile 20, 20' auch relativ zueinander so weit verschoben werden, daß die den engen Trennspalt 21 bildenden Teile der Dornteile 20, 20' hintereinander liegen, so daß zwischen ihnen eine Art Einführungstrichter mit einer Öffnungsweite besteht, die oberhalb der Stärke des Trennspalts 21 liegt. Die Verschiebung kann derart erfolgen, wie sie beispielsweise aus der DE 196 40 833 C1 bekannt ist, auf die hier verwiesen wird.

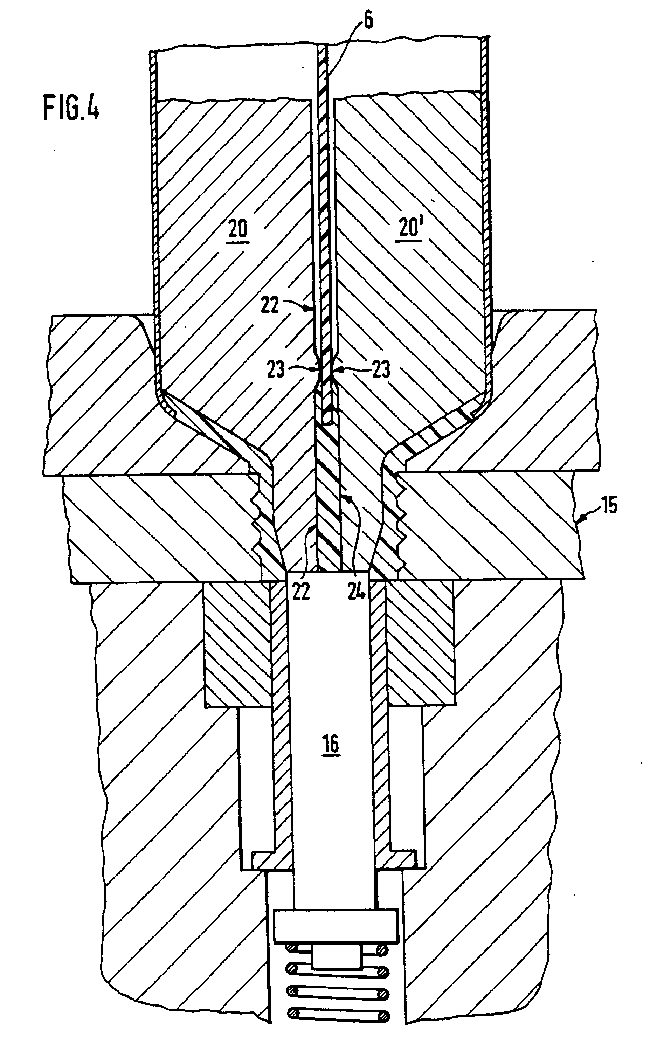

Bei dem in Fig. 4 dargestellten Ausführungsbeispiel weist der Dorn 19 zwischen seinen beiden Dornteilen 20, 20' einen durchgehenden verbreiterten Schlitz 22 auf, der lediglich an einer im Kopfbereich bzw. an dessen Übergang zum Rohrkörper 2 liegenden Stelle durch zwei sich gegenüberliegende Vorsprünge 23 in jedem Dornteil 20, 20' verengt ist.

Der Abstand zwischen den beiden Vorsprüngen 23 entspricht vorzugsweise wiederum der Stärke der verwendeten Trennwand 6, um diese zu halten und beim Anpreßvorgang zu stabilisieren. In den sich von den Vorsprüngen 23 zum vorderen Ende der Dornteile 20, 20' erstreckenden Bereich 24 des Schlitzes 22 ragt nur das obere Ende der zwischen den Vorsprüngen 23 gehaltenen Trennwand 6. In diesen erweiterten Bereich 24 dringt bei der Anformung des Tubenkopfes 2 auch Kunststoffschmelzmaterial ein, wobei die Vorsprünge 23 ein weiteres Eindringen von Schmelze in den dahinter liegenden Teil des Schlitzes 22 verhindern, so daß die Schmelze den in den vorderen Bereich ragenden Abschnitt der Trennwand 6 umgibt und so den sich bis zum Lochstempel 16 erstreckenden oberen Abschnitt der Trennwand 6 bildet. Hierdurch besteht die Möglichkeit, einen rein rechteckigen Zuschnitt für die Trennwand 6 zu verwenden, da keinerlei Anpassung an die Innenform des Tubenkopfes und Halses erforderlich ist, was auch das Entstehen von durch Halsvorsprünge verursachten Abfällen an Trennwandmaterial vermeidet. Die Einführung einer Trennwand ohne Vorsprünge in einem Dorn ist auch technisch einfacher zu lösen.

Durch das Zusammenspiel des vorderen Endes des Doms 19 mit der Stirnfläche des vorzugsweise durch eine Feder beaufschlagten Lochstempels 16 kann die Höhe H (Fig. 1) der Ausgabeöffnung 8 variiert werden.

Beim Ausführungsbeispiel gemäß Fig. 4 kann der Lochstempel 16 auch einen Aufsatz (in Fig. 2 angedeutet) aufweisen, der der Form des gewünschten Ausschnitts 13 im oberen Ende der Trennwand 6 dient, wenn diese aus Kunststoffmaterial zusammen mit dem Kopf geformt wird.

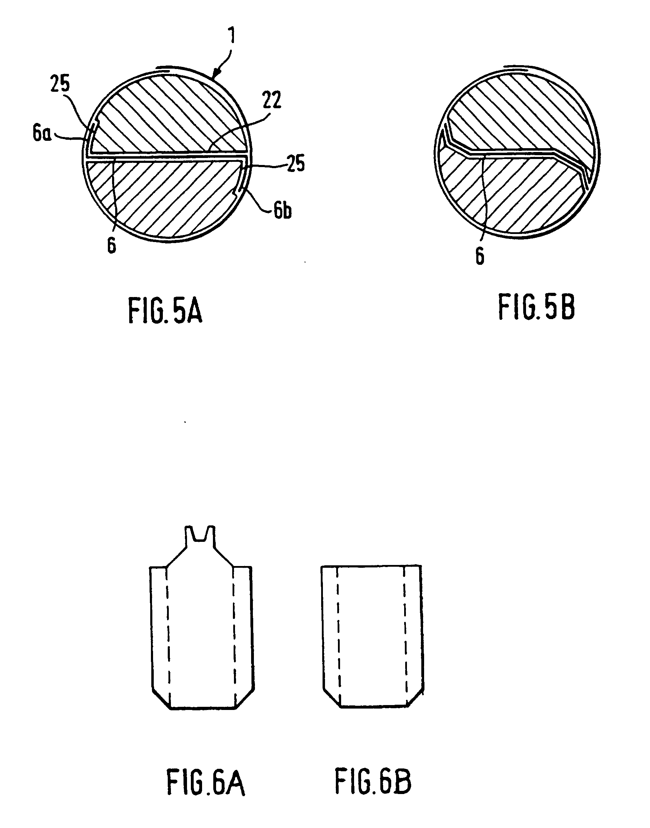

In Fig. 3 und 4 werden durch die Dome 19 Rohlinge, d. h. Rohrkörper 1, in denen bereits eine Trennwand 6 angeordnet ist, der Matrize 15 zugeführt. In Fig. 5 sind zwei Querschnitte von Rohlingen mit der Anordnung einer Trennwand 6 in einem Rohrkörper 1 dargestellt. In Fig. 5a ist eine Trennwand 6 dargestellt, die seitlich mit abgewinkelten Kanten 6a, 6b versehen ist, die über die beiden Dornteile 20, 20' seitlich hervorragen und die in in den Dornteilen 20, 20' ausgeführten Längsaussparungen 25 anordenbar sind. Die Kanten 6a, 6b können hierbei durch geeignete Maßnahmen angeformt bzw. eingeformt werden. Erwünschtenfalls sind die Kanten 6a, 6b auch durch geeignete Mittel, z. B. durch Verschweißen fest mit dem Tubenrohr 1 verbunden. Bei dem in Fig. 5b dargestellten Ausführungsbeispiel ist die Trennwand 6 im Querschnitt mehrfach abgewinkelt und stößt mit ihren freien Enden gegen die Rohrwand 1.

In Fig. 6a und b sind Zuschnitte von Trennwänden 6 nebeneinander dargestellt. Die strichlierten Linien geben Biegekanten wieder, die z. B. durch Vorprägung ausgeführt sein können. Der Zuschnitt gemäß Fig. 6b ist dann zu verwenden, wenn der obere für den Kopfbereich vorgesehene Abschnitt der Trennwand 6 durch Verpressen einer Kunststoffschmelze gleichzeitig mit dem Anformen des Kopfes erfolgen soll. Der andere Zuschnitt 6a weist in den Zuschnitt integrierte vorspringende Abschnitte für den Kopfbereich auf. Durch die in Fig. 5b dargestellte Ausführungsform einer Trennwand 6 mit Mehrfachabbiegungen wird ihr im Tubenkörper 1 eine gewisse Elastizität und damit eine seitlich federnde und abdichtende Wirkung gegen den umgebenden Rohrkörper 1 verliehen.

Die Trennwand 6 kann z. B. aus einer Polyethylen (PE) - Folie ausgestanzt werden, wobei auch andere Kunststoffe u. a. High Density Polyethylen (HDPE), ein Polyethylen hoher Dichte, und auch andere bei der Herstellung von Tuben verwendete Materialien eingesetzt werden können. Die Stärke einer solchen Trennwand kann je nach der gewünschten Steifigkeit weit variieren, eine Stärke von z. B. 0,2 mm hat sich als vorteilhaft erwiesen.

## Patentansprüche

1. Zweikammertube, bestehend aus einem Tubenrohr (1) und einem angeformten Tubenkopf (2), der eine Schulter (3) und einen zentralen Hals (4) aufweist, in dem ein Durchgangskanal (7) besteht, der in einer verschließbaren Ausgabeöffnung (8) mündet, wobei im Tubenrohr (1) und im Tubenkopf (2) eine Trennwand (6) angeordnet ist, und wobei
sich an den zylindrischen Durchgangskanal (9) in Richtung zur Ausgabeöffnung (8) ein konisch verjüngter Kanalabschnitt (10) anschließt, in dem das obere Ende der Trennwand (6) verankert ist,
**dadurch gekennzeichnet,**
**dass** im oberen Teil der Trennwand (6) ein Ausschnitt (13) ausgeführt ist und eine Verschlusskappe vorhanden ist, die einen inneren Vorsprung aufweist, der bei aufgeschraubter Verschlusskappe mit dem Ausschnitt (13) zur Trennung der kammern zusammenwirkt.

2. Zweikammertube nach Anspruch 1, **dadurch gekennzeichnet, dass** der Ausschnitt (13) rechteckig, quadratisch oder konisch ist.

3. Zweikammertube nach Anspruch 1 oder 2, **dadurch gekennzeichnet, dass** der Ausschnitt (13) symmetrisch zur Zentralachse der Zweikammertube ausgeführt ist.

## Claims

1. Two-chamber collapsible tube, comprising a tubular section (1) and a formed tube head (2) that consists of a shoulder (3) and a central neck (4), provided with a through duct (7) that ends in a closable output opening (8), wherein a partition (6) is arranged in the tubular section (1) and the tube head (2), and wherein a conically tapered duct section (10) is provided adjacent to the cylindrical through duct (9) in the direction of the output opening (8), with the upper end of the partition (6) being anchored in said duct section (10),
**characterized in that**
a cutout (13) is made in the upper part of the partition (6) and a closing cap comprising an inner projection is arranged therein, wherein, with the closing cap being screwed on, said inner projection is associated with the cutout (13) in order to achieve separation of the chambers.

2. Two-chamber collapsible tube according to Claim 1, **characterized in that** the cutout (13) has a rectangular, square or conical shape.

3. Two-chamber collapsible tube according to Claim 1 or 2, **characterized in that** the cutout (13) is designed symmetrically to the central axis of the two-chamber collapsible tube.

## Revendications

1. Tube à deux chambres comprenant un tuyau tubulaire (1) et une tête de tube (2) qui y est formée, comportant un épaulement (3) et un col central (4), contenant un canal de passage (7), débouchant dans une ouverture de sortie à fermeture (8), une paroi de séparation (6) étant agencée dans le tuyau tubulaire (1) et dans la tête du tube (2), une section de canal à rétrécissement conique (10) étant raccordée au canal de passage cylindrique (9), en direction de l'ouverture de sortie (8), l'extrémité supérieure de la paroi de séparation (6) étant ancrée dans celle-ci,
**caractérisé en ce que** la partie supérieure de la paroi de séparation (6) comporte une entaille (13), et **en ce qu'**il comporte un capuchon de fermeture avec une saillie interne, coopérant lors de l'application par vissage du capuchon de fermeture avec l'entaille (13) en vue de la séparation des chambres.

2. Tube à deux chambres selon la revendication 1, **caractérisé en ce que** l'entaille (13) est rectangulaire, carrée ou conique.

3. Tube à deux chambres selon les revendications 1 ou 2, **caractérisé en ce que** l'entaille (13) est symétrique à l'axe central du tube à deux chambres.
